# EUROPÄISCHE PATENTSCHRIFT

(11) **EP 3 033 979 B1**
(45) Veröffentlichungstag und Bekanntmachung des Hinweises auf die Patenterteilung: **11.04.2018**
(21) Anmeldenummer: 15197784.0
(22) Anmeldetag: 03.12.2015
(51) Int. Cl.: A47K 1/05, E03D 11/14, E03C 1/322, F16B 7/04, F16B 35/00

(54) **BEFESTIGUNGSVORRICHTUNG ZUR BEFESTIGUNG EINES SANITÄROBJEKTS**
FASTENING DEVICE FOR FASTENING A SANITARY OBJECT
DISPOSITIF DE FIXATION DESTINE A LA FIXATION D'UN OBJET SANITAIRE

(30) Priorität: 18.12.2014 DE 102014018978
(43) Veröffentlichungstag der Anmeldung: 22.06.2016
(73) Patentinhaber: fischerwerke GmbH & Co. KG, 72178 Waldachtal (DE)
(72) Erfinder: Miotto, Moreno, 35028 Piove di Sacco (IT); Martini, Michele, 30038 Spinea (Venezia) (IT)
(74) Vertreter: Suchy, Ulrich Johannes

(56) Entgegenhaltungen:
- EP-B1- 1 338 711
- CN-U- 202 426 438
- CN-U- 203 684 353

## Beschreibung

Die Erfindung betrifft eine Befestigungsvorrichtung zur Befestigung eines Sanitärobjekts aus Keramik mit den Merkmalen des Oberbegriffs des Anspruchs 1.

Aus der Druckschrift EP 01338711 B1 ist so eine Befestigungsvorrichtung bekannt, mit der ein keramisches Sanitärobjekt, insbesondere eine Toilettenschüssel, an einer Wand befestigbar ist. Dabei wird von zwei Gewindestangen ausgegangen, die standardmäßig im Bereich des Zu- und Abflusses eines WC angeordnet sind. Auf die Gewindestangen wird vor dem Aufsetzen des Sanitärobjekts jeweils ein Adapterelement aufgeschraubt, das stabförmig ist und ein Innengewinde für die Gewindestange aufweist. Das Adapterelement weist außerdem eine seitliche Eingriffsöffnung auf. Im Sanitärobjekt ist ein Grundkörper vormontiert, der einen Aufnahmekanal für das Adapterelement aufweist. In diesen Aufnahmekanal wird das Adapterelement eingeschoben beziehungsweise das Sanitärobjekt wird mit dem Grundkörper über das vormontierte Adapterelement gestülpt. Um das Adapterelement im Grundkörper zu fixieren, ist in einer quer zum Aufnahmekanal verlaufenden Gewindebohrung im Grundkörper eine Madenschraube angeordnet, deren Spitze durch tieferes Einschrauben in die seitliche Eingriffsöffnung des Adapterelements eingreift. Sowohl die Spitze, als auch die Eingriffsöffnung sind angeschrägt, so dass das Anziehen der Madenschraube ein Einziehen des Adapterelements in den Grundkörper bewirkt. Der Grundkörper stützt sich dabei an einer Innenwand des Sanitärobjekts ab und drückt dieses gegen die Wand.

Es wurde festgestellt, dass es bei einer derartigen Befestigungsvorrichtung zu Fehlmontagen kommen kann. Insbesondere kann es vorkommen, dass das Adapterelement derart auf die Gewindestangen geschraubt wird, dass die Madenschraube nicht in die Eingriffsöffnung greifen kann. Der Grund hierfür liegt darin, dass das Adapterelement bis zu einem Anschlag aufgeschraubt wird, ohne dass darauf geachtet wird, dass die Eingriffsöffnung zur Madenschraube beziehungsweise zum Grundkörper und der Gewindebohrung ausgerichtet ist. Ist das Adapterelement beispielsweise so orientiert, dass die Eingriffsöffnung gegenüber der Gewindebohrung angeordnet ist, kann die Madenschraube nicht in die Eingriffsöffnung greifen. Dies führt dazu, dass kein ausreichender Halt erreicht wird, da die Madenschraube das Adapterelement nur über Reibschluss halten kann. Ein stärkeres Anziehen der Madenschraube kann zur Zerstörung der Gewindebohrung führen.

Aufgabe der Erfindung ist es daher, die Montage einer derartigen Befestigungsvorrichtung einfacher und sicherer zu machen.

Diese Aufgabe wird erfindungsgemäß durch die Merkmale des Anspruchs 1 gelöst. Die erfindungsgemäße Befestigungsvorrichtung dient zur Befestigung eines Sanitärobjekts aus Keramik, wie ein Waschtisch, eine Toilettenschüssel, ein Urinal oder ein Bidet. Die Befestigungsvorrichtung weist einen Grundkörper auf, der insbesondere aus Kunststoff und vorzugsweise einstückig ist, mit einem Aufnahmekanal, der sich entlang einer Längsachse erstreckt. Der Aufnahmekanal ist vorzugsweise seitlich geschlossen, könnte aber auch eine seitliche Öffnung aufweisen. In den Aufnahmekanal ist ein Adapterelement einführbar, das insbesondere stangenförmig ist und das mittels einer Gewindebohrung auf eine Gewindestange aufschraubbar ist. Damit kann das Adapterelement im Rahmen einer Vormontage auf eine von einer Wand abstehende Gewindestange aufgeschraubt werden. Die Befestigungsvorrichtung weist außerdem ein Halteelement auf, das dem formschlüssigen Halten des Adapterelements im Aufnahmekanal dient und dazu insbesondere quer zur Längsachse des Aufnahmekanals verstellbar im Grundkörper angeordnet ist. "Quer" bedeutet hier insbesondere im Wesentlichen senkrecht zur Längsachse, umfasst aber auch eine schräge Anordnung zur Längsachse. Das Halteelement ist insbesondere eine Schraube, die insbesondere als Madenschraube ausgeführt ist. Grundsätzlich kommen aber auch andere Formen für das Halteelement in Frage. Insbesondere kann statt oder zusätzlich zu einem Eingriff des Halteelements in das Adapterelement auch umgekehrt das Adapterelement in das Halteelement eingreifen. Die Befestigungsvorrichtung weist insbesondere ein Fixierelement auf, mit dem der Grundkörper im Rahmen einer Vormontage am Sanitärobjekt festgelegt werden kann, beispielsweise in Form eines Hintergreifelements, eines Klemmelements oder einer Klebeeinrichtung. Ohne den Erfindungsgedanken zu verlassen, könnte die Befestigungsvorrichtung aber auch kein derartiges Fixierelement aufweisen, wenn es beispielsweise beim Aufschieben des Sanitärobjekts über das Adapterelement von Hand an der entsprechenden Stelle gehalten wird. Zusammen mit dem zu befestigenden Sanitärobjekt und der Gewindestange bildet die Befestigungsvorrichtung eine Befestigungsanordnung.

Die erfindungsgemäße Befestigungsvorrichtung ist durch eine Einrichtung gekennzeichnet, die derart gestaltet ist, dass das Adapterelement nur innerhalb eines begrenzten Drehbereichs um die Längsachse in den Aufnahmekanal einführbar ist. Mit dem "Drehbereich" ist hier die mögliche Winkeltoleranz um die Längsachse des Aufnahmekanals zwischen Adapterelement und Grundkörper gemeint. "Begrenzter Drehbereich" schließt hier ein, dass das Adapterelement nur in einer ganz bestimmten Orientierung, also mit einer Winkeltoleranz unter ±1 Grad, einführbar ist. Erfindungsgemäß ist der Drehbereich jedoch mindestens 2 Grad groß, erlaubt also eine Winkeltoleranz von mindestens ±1 Grad, vorzugsweise ist der Drehbereich mindestens 10 Grad groß. "Begrenzter Drehbereich" bedeutet außerdem, dass das Adapterelement nicht in jeder Orientierung einführbar ist. Erfindungsgemäß ist der Drehbereich, innerhalb dessen das Adapterelement einführbar ist, maximal 180 Grad groß und vorzugsweise maximal 90 Grad groß. Die erfindungsgemäße Befestigungsvorrichtung verhindert, dass das Adapterelement so in den Aufnahmekanal eingeführt wird, dass das Halteelement keinen formschlüssigen Halt findet. Sowohl die Gefahr, dass kein ausreichender Halt gefunden wird und möglicherweise die Befestigung bei Belastung des Sanitärobjekts versagt, als auch die Gefahr, dass das Halteelement zu fest angezogen und dadurch die Befestigungsvorrichtung beschädigt wird, ist damit eliminiert. Je größer der begrenzte Drehbereich ist, desto weniger genau muss das Adapterelement im Rahmen einer Vormontage auf eine Gewindestange ausgerichtet werden. Bei der Bestimmung der Größe des Drehbereichs muss darauf geachtet werden, dass über den gesamten Drehbereich der spätere Halt des Halteelements am Adapterelement gewährleistet ist.

Vorzugsweise ist die Einrichtung derart gestaltet, dass das Einführen des Adapterelements in den Aufnahmekanal eine Zentrierung des Adapterelements bezüglich dessen Orientierung um die Längsachse bewirkt. Die Relativbewegung zwischen dem Adapterelement und dem Aufnahmekanal des Grundkörpers bewirkt also bei Abweichung von einem Sollwert des Drehwinkels um die Längsachse eine Verdrehung des Adapterelements derart, dass der Drehwinkel sich zumindest in Richtung des Sollwerts bewegt. Das Adapterelement wird dabei insbesondere relativ zu der Gewindestange gedreht, auf die es zuvor geschraubt wird. Vorzugsweise ist das Adapterelement daher nur relativ lose auf die Gewindestange geschraubt und nicht etwa fest verspannt gegen einen Anschlag. Um die Zentrierung zu bewirken, weisen insbesondere der Grundkörper und/oder das Adapterelement Ablenkflächen auf, die die Zentrierung bewirken. Die Zentrierung durch das Einführen des Adapterelements in den Aufnahmekanal hat den Vorteil, dass es automatisch, bevor das Halteelement angezogen wird, zu einer genaueren Ausrichtung kommt. Das formschlüssige Eingreifen des Halteelements in das Adapterelement beziehungsweise des Adapterelements in das Halteelement wird durch die Zentrierung entweder erst ermöglicht oder zumindest verbessert.

Zusätzlich oder alternativ zu dieser Zentrierung schlägt die Erfindung vor, dass das Halteelement und das Adapterelement derart gestaltet sind, dass ein Verstellen des Halteelements in Richtung des Adapterelements eine Zentrierung des Adapterelements bezüglich dessen Orientierung um die Längsachse bewirkt. Auf diese Weise sorgt das Halteelement im Zusammenspiel mit dem Adapterelement selbst für dessen Ausrichtung. Das Halteelement und/oder das Adapterelement haben insbesondere Ablenkflächen, die die Zentrierung bewirken. Wiederum wird das formschlüssige Eingreifen des Halteelements in das Adapterelement beziehungsweise des Adapterelements in das Halteelement durch die Zentrierung entweder erst ermöglicht oder zumindest verbessert.

Vorzugsweise weist das Adapterelement eine zumindest teilweise zylindrische Außenfläche auf. Dies ermöglicht die einfache Herstellung des Adapterelements inklusive dessen Gewindebohrung aus einem stangenförmigen Rundmaterial.

Um auf einfache Weise zu erreichen, dass das Adapterelement wie beschrieben nur innerhalb eines begrenzten Drehbereichs in den Aufnahmekanal einführbar ist, schlägt die Erfindung vor, dass der Aufnahmekanal zumindest abschnittsweise einen von der Kreisform abweichenden Querschnitt aufweist. Der Querschnitt des Adapterelements korrespondiert insbesondere zu diesem Querschnitt des Grundkörpers. "Korrespondieren" meint hier eine Übereinstimmung derart, dass sich der erfindungsgemäße begrenzte Drehbereich ergibt. Anders ausgedrückt wirken das Adapterelement und der Aufnahmekanal nach dem Schlüssel-Schloss-Prinzip zusammen, wobei in Abweichung typischer Schlösser die Querschnitte so gewählt sind, dass auch ein Einführen innerhalb der beschriebenen Winkeltoleranz möglich ist. Alternativ zu einer solchen rein mechanischen Lösung könnte zwar auch ein Sensor eingesetzt werden, der die Orientierung feststellt, und ein Aktor, wie ein Schieber, der das Einführen bei falscher Orientierung verhindert, doch wäre der technische Aufwand hierfür sehr hoch.

In einer bevorzugten Ausführungsform weist der Grundkörper einen Vorsprung auf, der den Aufnahmekanal gegenüber einem gedachten Kreisquerschnitt verengt. Der Vorsprung kann verschiedenste Geometrien aufweisen. Beispielsweise kann der Vorsprung noppenförmig, rippenförmig oder raupenförmig sein. Auch ist es möglich, dass der Vorsprung den Kreisquerschnitt sekantenartig wie beispielsweise bei Schlüsselflächen für einen Gabelschlüssel verengt, wobei der Vorsprung beispielsweise auch konkav oder konvex ausgeformt sein kann. Alternativ oder zusätzlich zu einem Vorsprung kann am Grundkörper eine Ausnehmung angeordnet sein, wobei wiederum unterschiedlichste geometrische Formen, wie beispielsweise Nuten, möglich sind.

Vorzugsweise weist der Grundkörper einen Vorsprung auf, der den Aufnahmekanal gegenüber einem gedachten Kreisquerschnitt verengt, der sich über maximal 60 Grad, insbesondere über maximal 45 Grad, des Umfangs des Aufnahmekanals erstreckt. Gegenüber einem sich über einen größeren Winkel erstreckenden Vorsprung hat dies den Vorteil, dass je nach Ausformung des Adapterelements sowohl ein sehr kleiner begrenzter Drehbereich, als auch ein großer begrenzter Drehbereich erreichbar ist. Auch ist nur wenig Material zur Ausbildung des Vorsprungs notwendig.

Um einen einfachen Aufbau zu gewährleisten, weist das Adapterelement in einer bevorzugten Ausführungsform eine Eingriffsöffnung für das Halteelement auf. Die Eingriffsöffnung hat insbesondere die Form einer sich quer zur Längsachse des Adapterelements erstreckenden Ausnehmung. Vorzugsweise ragt der oben genannte Vorsprung in diese Eingriffsöffnung, wenn das Adapterelement in den Aufnahmekanal eingeführt ist. Dies ermöglicht, dass die Eingriffsöffnung eine Doppelfunktion erfüllen kann: Einerseits dient sie dazu, dem Halteelement einen formschlüssigen Halt zu geben, andererseits bildet sie am Adapterelement den zum Aufnahmekanal korrespondierenden Querschnitt, der dafür sorgt, dass der Vorsprung im fertig montierten Zustand Platz findet, also nicht mit dem Adapterelement kollidiert. Durch die Doppelfunktion kann die Ausbildung weiterer geometrischer Ausprägungen entfallen, was die Herstellung vereinfacht.

Die Herstellung wird außerdem vereinfacht, wenn die Eingriffsöffnung bis in den Bereich einer Einführspitze des Adapterelements ragt. Die Eingriffsöffnung bildet hierdurch den zum Aufnahmekanal korrespondierenden Querschnitt, der dafür sorgt, dass das Adapterelement nur innerhalb eines begrenzten Drehbereichs um die Längsachse in den Aufnahmekanal einführbar ist. Auch für diese Funktion sind somit keine weitere geometrische Ausformungen, wie beispielsweise Nuten oder Abflachungen, notwendig.

Um sowohl die oben genannte Zentrierwirkung zwischen Halteelement und Adapterelement als auch eine Zugwirkung des Grundkörpers auf das Adapterelement zu erreichen, schlägt die Erfindung vor, dass das Halteelement und/oder die Eingriffsöffnung konisch ausgebildet sind. Hierdurch wird außerdem eine gute Herstellbarkeit erreicht.

Vorzugsweise weist die Befestigungsvorrichtung ein Einrastelement auf, das am Grundkörper angeordnet ist und das beim Einführen des Adapterelements in ein Hinterschneidelement des Adapterelements selbsttätig eingreift. Hierdurch wird erreicht, dass beim Überstülpen des zu befestigenden Sanitärobjekts automatisch eine Verbindung zwischen Grundkörper und Adapterelement hergestellt wird. Mit dem "Überstülpen des Sanitärobjekts" ist hier gemeint, dass das Sanitärobjekt samt dem Grundkörper zum Adapterelement geführt wird und das Adapterelement dabei in den Aufnahmekanal des Grundkörpers eingeführt wird. Durch das Einrastelement ist das Sanitärobjekt gegen eine Bewegung entgegen der Einführrichtung am Adapterelement gesichert. Ein unbeabsichtigtes Lösen und Herunterfallen des Sanitärobjekts in diesem Stadium der Montage wird also verhindert, wodurch die Montage sicherer wird. Durch die Sicherung des Sanitärobjekts ist insbesondere das anschließende Verstellen des Halteelements erleichtert, das notwendig ist, um das Halteelement in formschlüssigen Halt mit dem Adapterelement zu bringen. Das Sanitärobjekt kann also nach dem Überstülpen losgelassen werden. Die montierende Person kann die Hände dazu benutzen, das Halteelement zu verstellen, also im Falle einer Madenschraube als Halteelement diese mit einem Werkzeug anzuziehen. Die Montage wird dadurch erleichtert.

Die Erfindung wird nachfolgend anhand eines Ausführungsbeispiels erläutert.

Es zeigen:
- Figur 1a: die erfindungsgemäße Befestigungsvorrichtung während der Montage eines Sanitärobjekts an einer Wand in einem Längsschnitt;
- Figur 1b: dieselbe Befestigungsvorrichtung in einer Schnittdarstellung gemäß Ebene Ib aus Figur 1a;
- Figur 2: dieselbe Befestigungsvorrichtung in einer perspektivischen Explosionsdarstellung ohne Fixierelement;
- Figur 3: den Grundkörper derselben Befestigungsvorrichtung mit dem Einrastelement in einer perspektivischen Ansicht;
- Figur 4a: die erfindungsgemäße Befestigungsvorrichtung während der Montage eines Sanitärobjekts an einer Wand bei schräg gestelltem Adapterelement in einem Längsschnitt;
- Figur 4b: dieselbe Befestigungsvorrichtung in einer Schnittdarstellung gemäß Ebene IVb aus Figur 4a;

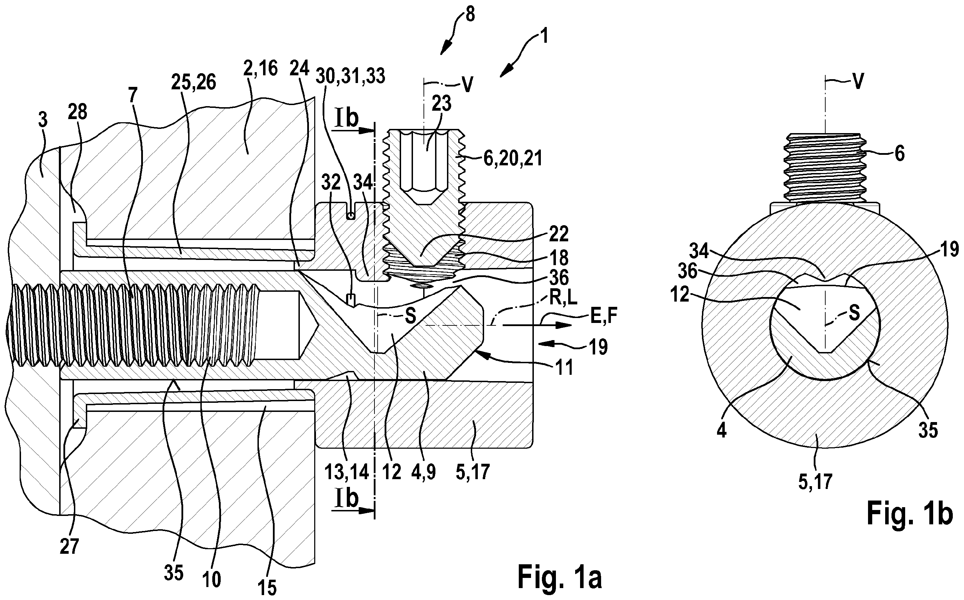

Die in Figur 1 dargestellte Befestigungsvorrichtung 1 dient der Befestigung eines Sanitärobjekts 2, an einer Wand 3. Zu der Befestigungsvorrichtung 1 gehören ein Adapterelement 4, ein Grundkörper 5 und eine Schraube 6. Von der Wand 3 ragt eine metrische Gewindestange 7 ab, auf die das Adapterelement 4 aufgeschraubt ist. Zusammen mit der Gewindestange 7 bildet die Befestigungsvorrichtung 1 eine Befestigungsanordnung 8, wobei man zu dieser auch das Sanitärobjekt 2 und/oder die Wand 3 zählen kann. Das Adapterelement 4 weist einen Schaft 9 auf, der weitgehend rotationssymmetrisch und stabförmig ist. An einem der Wand 3 zugewandten hinteren Ende weist das Adapterelement 4 eine Gewindebohrung 10 auf. Mit dieser Gewindebohrung 10 ist das Adapterelement 4 auf die Gewindestange 7 geschraubt, so dass das hintere Ende an der Wand 3 anliegt. "Hinten" und "vorne" bezieht sich hier und im Folgenden stets auf eine Einführrichtung E des Adapterelements 4 in den Grundkörper 5. Die Einführrichtung E zeigt senkrecht von der Wand 3 weg.

Am vorderen Ende weist das Adapterelement 4 eine stumpfe Einführspitze 11 und unmittelbar anschließend eine radial orientierte, kegelige Eingriffsöffnung 12 auf, die sich von seitlich außen entlang einer Symmetrieachse S bis über eine Rotationsachse R des Adapterelements 4 hinaus erstreckt. Die Symmetrieachse S verläuft radial bezüglich des Adapterelements 4. Die Eingriffsöffnung 12 ragt längs des Adapterelements 4 bis in den Bereich einer Einführspitze 11 des Adapterelements 4 hinein. Anders ausgedrückt überlappt sich geometrisch der die Eingriffsöffnung 12 beschreibende Kegel mit dem die Einführspitze 11 beschreibende Kegelstunmpf. Im Bereich der hinteren Hälfte der Eingriffsöffnung 12 ist am Adapterelement 4 eine umlaufende V-Nut 13 angeordnet. Die V-Nut 13 bildet ein Hinterschneidelement 14 des Adapterelements 4. Die V-Nut 13 ist so ausgebildet, dass ihre vordere Schrägfläche einen größeren Winkel zur Rotationsachse R einschließt als ihre hintere Schrägfläche. Die Gewindebohrung 10 ragt in Längsrichtung bis in den Bereich der Eingriffsöffnung 12, ohne allerdings in die Eingriffsöffnung 12 zu münden.

Das Adapterelement 4 durchragt ein Durchgangsloch 15 einer Wandung 16 des Sanitärobjekts 2. Vor dem Durchgangsloch 15 ist das Adapterelement 4 von einer Hülse 17 des Grundkörpers 5 umfasst. Die Hülse 17 weist eine radial durchdringende Innengewindebohrung 18 auf. Das Innere der Hülse 17 bildet einen Aufnahmekanal 19. Der Aufnahmekanal 19 erstreckt sich entlang einer Längsachse L des Grundkörpers 5, wobei die Längsachse L im dargestellten Zustand während der Montage im Wesentlichen mit der Rotationsachse R des Adapterelements 4 zusammenfällt. In der Innengewindebohrung 18 ist die Schraube 6 als Halteelement 20 in Form einer Madenschraube 21 angeordnet, wobei die Spitze 22 der Madenschraube 21 dem Adapterelement 4, und ein gegenüberliegender Innensechskant 23 dem Aufnahmekanal 19 abgewandt ist. Durch Drehen des Halteelements 20 mittels des Innensechskants 23 ist das Halteelement 20 quer zur Längsachse L in einer Verstellachse V verstellbar. Von der Hülse 17 aus nach hinten ragt ein kurzer zylindrischer Fortsatz 24, der das Adapterelement 4 unmittelbar umschließt und dessen Inneres damit einen Teil des Aufnahmekanals 19 bildet. Der Fortsatz 24 dient der Befestigung eines Fixierelements 25 in Form eines leicht konischen Rohrs 26, dass sich nach hinten im Durchmesser erweitert. Das vordere Ende des Rohrs 26 weist ein kurzes Innengewinde (nicht dargestellt) auf, mit dem es auf dem Fortsatz 24 befestigt ist. Der Fortsatz 24 weist hierzu am äußeren Umfang ein Außengewinde (nicht dargestellt) auf. Am hinteren Ende weist das Rohr 26 einen umlaufenden Flansch 27 auf, der die Wandung 16 des Sanitärobjekts 2 hintergreift, während die Hülse 17 des Grundkörpers 5 auf einer gegenüberliegenden Seite der Wandung 16 anliegt. Die Wandung 16 weist dort, wo der umlaufende Flansch 27 anliegt, eine Nische 28 auf.

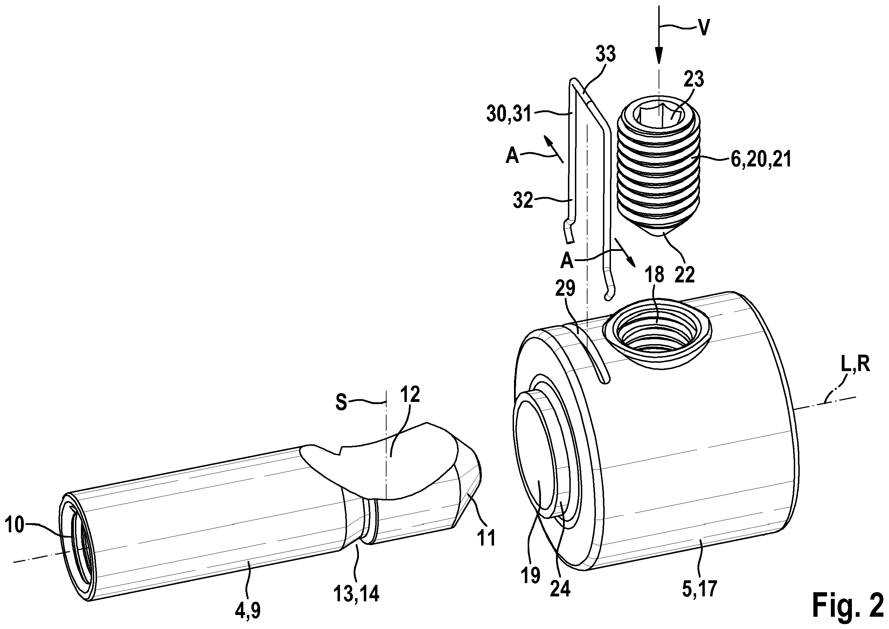

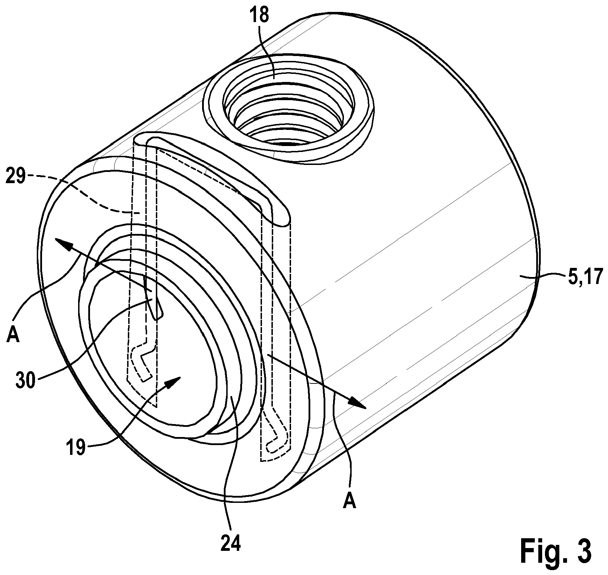

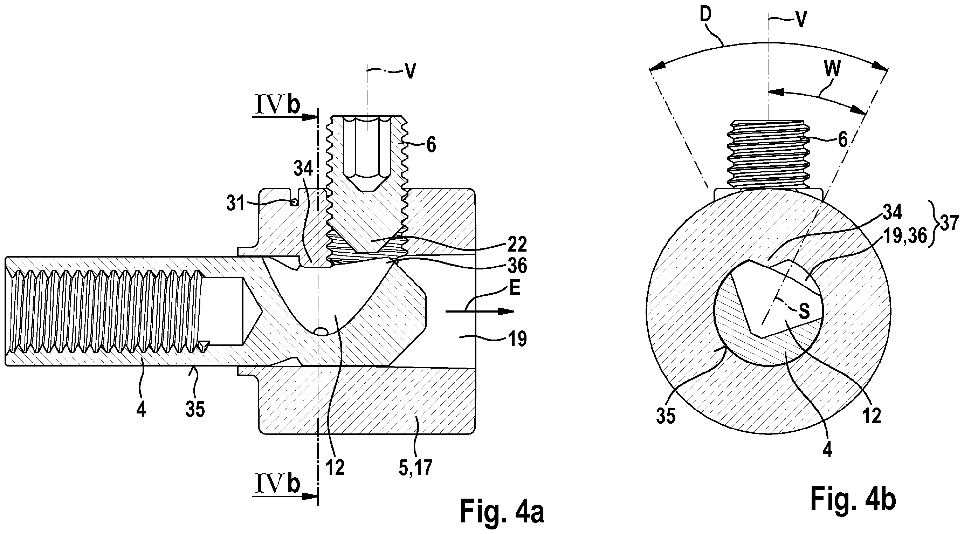

Wie aus Figuren 2 und 3 deutlich wird, ist der Grundkörper 5 im hinteren Bereich von einem U-förmigen Schlitz 29 durchsetzt, wobei die Wangen des U in Sekantenrichtung zum Aufnahmekanal 19 verlaufen. Im Schlitz 29 ist ein im Wesentlichen U-förmiges Drahtbiegeteil 30 angeordnet, das ein Einrastelement 31 bildet. Die Wangen des U-förmigen Drahtbiegeteils 30 bilden Halteabschnitte 32 mit abgewinkelten Endabschnitten. Die Halteabschnitte 32 sind über einen Lagerungsabschnitt 33 miteinander verbunden. Die Halteabschnitte 32 verlaufen in Sekantenrichtung zum Aufnahmekanal 19. Die Halteabschnitte 32 ragen vor der Montage in den Aufnahmekanal 19 und verengen den Aufnahmekanal 19 dadurch, wie in Figur 3 sichtbar. Sie sind von einander weg in einer Ausweichrichtung A, quer zur Längsachse L und senkrecht zur Verstellachse V des Halteelements 20 bewegbar, wobei die Bewegung elastisch erfolgt. Beim Einführen des Adapterelements 4 in den Aufnahmekanal 19 bewirkt die Einführspitze 11 des Adapterelements 4, dass die Halteabschnitte 32 in Ausweichrichtung A verdrängt werden, bis sie in die V-Nut 13 einrasten. Dieser eingerastete Zustand ist in den Figuren 1a und 4a dargestellt.

Hinten angrenzend an die Innengewindebohrung 18 ist im Aufnahmekanal 19 ein Vorsprung 34 angeordnet, der den ansonsten kreisförmigen Querschnitt des Aufnahmekanals 19 verengt (siehe Figuren 1a und 1b). Der Vorsprung 34 hat einen flachen V-förmigen Querschnitt und erstreckt sich parallel zur Längsachse L über eine kurze Länge, die etwa 10 bis 20 Prozent der Länge der Hülse 17 entspricht. Der Vorsprung 34 erstreckt sich über etwa 40 Grad des Umfangs des Aufnahmekanals 19.

Zur Montage der Befestigungsanordnung 8 wird im Rahmen einer Vormontage das Adapterelement 4 wie dargestellt auf die Gewindestange 7 geschraubt. Der Grundkörper 5 wird außerdem im Bereich des Durchgangslochs 15 von vorne an der Wandung 16 gehalten und mit dem Fixierelement 25 an der Wandung 16 befestigt, in dem das Fixierelement 25 von hinten durch das Durchgangsloch 15 gesteckt und mit dem Grundkörper 5 verschraubt wird. Idealerweise sind das Adapterelement 4 und der Grundkörper 5 bezüglich ihrer Orientierung um die Längsachse L so ausgerichtet, wie dies in den Figuren 1a, 1b und 2 dargestellt ist, also derart, dass die Verstellachse V des Halteelements 20 parallel zur Symmetrieachse S der Eingriffsöffnung 12 steht. Nach der Vormontage kann das Sanitärobjekt 2 mit den Grundkörper 5 im Rahmen einer Hauptmontage über das Adapterelement 4 geschoben werden. Dabei wird das Adapterelement 4 in den Aufnahmekanal 19 eingeführt. Bis auf den Bereich des Vorsprungs 34 weist der Aufnahmekanal 19 einen kreisförmigen Querschnitt auf. Das Adapterelement 4 weist eine korrespondierende Außenfläche 35 auf, die in weiten Teilen zylindrisch ist, so dass sich ebenfalls ein kreisförmiger Querschnitt ergibt. Allerdings weicht dieser Querschnitt insbesondere im Bereich der Eingriffsöffnung 12 von der Kreisform ab. Da die Einführspitze 11 in die Eingriffsöffnung 12 übergeht, ist in diesem Bereich eine Ausnehmung 36 gebildet, die in Einführrichtung E gesehen einen größeren Querschnitt aufweist als der Vorsprung 34 (siehe Figur 1b). Der Adapter 4 kann somit mit der Ausnehmung 36 am Vorsprung 34 vorbei geführt werden. Der Grundkörper 5 wird soweit über das Adapterelement 4 geschoben, bis das Einrastelement 31 in die V-Nut 13 einrastet, was auch als selbsttätiges Eingreifen des Einrastelements 31 in das Hinterschneidelement 14 aufgefasst werden kann. Hierdurch ist das Sanitärobjekt 2 gegen versehentliches Abziehen oder Herunterfallen vom Adapterelement 4 gesichert. Die montierende Person kann beide Hände dazu verwenden, im nächsten Schritt die Madenschraube 21 zu drehen und damit das Halteelement 20 in Eingriff mit der Eingriffsöffnung 12 zu bringen. Aufgrund der kegeligen Spitze 22 der Madenschraube 21 und der kegeligen Eingriffsöffnung 12 kommt es durch Anziehen der Madenschraube 21 zu einer Verschiebung des Grundkörpers 5 gegenüber dem Adapterelement 4 nach hinten in Richtung zur Wand 3. In der Folge schiebt die Hülse 17 das Sanitärobjekt 2 gegen die Wand 3. Da beim Anziehen gegen die Wand 3 eine weitere Relativbewegung zwischen Grundkörper 5 und Adapterelement 4 erfolgt, werden hierbei die Halteabschnitte 32 des Einrastelements 31 aufgrund der Form der V-Nut 13 wieder auseinander bewegt. Je nach dem, wie dick die Wandung 16 des Sanitärobjekts 2 ist, kann das Einrastelement 31 nach dem Anziehen gegen die Wand 3 noch innerhalb oder hinter der V-Nut 13 angeordnet sein. Soll die Befestigungsvorrichtung 1 später demontiert werden, so wird wiederum die Madenschraube 21 gelöst. Beim Herausziehen des Adapterelements 4 aus dem Aufnahmekanal 19 rastet das Einrastelement 31 wieder in die V-Nut 13 ein und sichert das Sanitärobjekt 2 gegen Herunterfallen. Durch Ziehen mit einer definierten Kraft F am Sanitärobjekt 2 beziehungsweise am Grundkörper 5 in Einführrichtung E kann diese Sicherung überwunden werden. Dabei sorgt die vordere Fläche der V-Nut 13 dafür, dass die Halteabschnitte 32 des Einrastelements 31 aufgrund der in Einführrichtung E wirkenden Kraft F radial nach außen gedrückt werden. Das Adapterelement 4 kann so wiederholt in und aus dem Grundkörper 5 heraus geführt werden und wird dabei jedes Mal selbststätig durch das Einrastelement 31 gesichert.

Wie erwähnt entspricht die Ausrichtung des Adapterelements 4 und des Grundkörpers 5 bezüglich ihrer Orientierung um die Längsachse L in Figuren 1a, 1b und 2 einem Idealzustand. Allerdings kann es durch eine ungenaue Montage zu einer Verdrehung der Verstellachse V zur Symmetrieachse S der Eingriffsöffnung 12 kommen, wie dies in den Figuren 4a und 4b dargestellt ist. Der Verdrehwinkel W beträgt in den Figuren etwa 24 Grad. Der Vorsprung 34 und die Ausnehmung 36 sind geometrisch so ausgebildet, dass dieser Verdrehwinkel W gerade noch zulässig ist. Wäre das Adapterelement 4 noch weiter gegenüber dem Grundkörper 5 verdreht, so würde beim Versuch eines Einführens des Adapterelements 4 in den Aufnahmekanal 19 der Vorsprung 34 mit dem Adapterelement 4 kollidieren, so dass das Aufschieben des Grundkörpers 5 zusammen mit dem Sanitärobjekt 2 auf das Adapterelement 4 nicht möglich ist. Die montierende Person erhält so eine klare Rückmeldung, dass der zuvor erfolgte Montageschritt korrigiert werden muss. Zu einer Fehlmontage kann es nicht kommen. Auch für eine mögliche Verdrehung in anderer Richtung begrenzt das Ausführungsbeispiel durch die Ausbildung des Vorsprungs 34 und der Ausnehmung 36 die Verdrehung auf 24 Grad gegenüber einer parallelen Ausrichtung der Verstellachse V zur Symmetrieachse S. Dieser Winkelbereich von ±24 Grad bildet einen begrenzten Drehbereich D und kann auch als Winkeltoleranz um die Längsachse L des Aufnahmekanals 19 zwischen Adapterelement 4 und Grundkörper 5 aufgefasst werden. Der Vorsprung 34 und die Ausnehmung 36 bilden zusammen eine Einrichtung 37 derart, dass das Adapterelement 4 nur innerhalb des begrenzten Drehbereichs D in den Aufnahmekanal 19 einführbar ist.

Wird das Adapterelement 4 wie in den Figuren 4a und 4b und dann noch weiter als dargestellt in den Aufnahmekanal 19 eingeführt, so stößt der Vorsprung 34 im hinteren Bereich der Eingriffsöffnung 12 an. Aufgrund der Konizität der Eingriffsöffnung 12 kommt es durch weiteres Einschieben zu einer Drehbewegung des Adapterelements 4 gegenüber dem Grundkörper 5, so dass der Verdrehwinkel W zumindest reduziert wird. Dies kann als eine Zentrierung des Adapterelements 4 bezüglich dessen Orientierung um die Längsachse L aufgefasst werden. Auch das Einschrauben des Halteelements 20 führt zu einer derartigen Zentrierung, da die Konzizität der Spitze 22 der Madenschraube 21 und der Eingriffsöffnung 12 zu einer Drehbewegung des Adapterelements 4 führt. Die Zentrierung erfolgt durch entsprechend starkes Anziehen des Halteelements 20 im Wesentlichen vollständig, das heißt die Verstellachse V steht schließlich parallel zur Symmetrieachse S. Somit erlaubt die Befestigungsvorrichtung 1 eine relativ ungenaue Ausrichtung von Adapterelement 4 und Grundkörper 5 im Rahmen der Vormontage innerhalb des Drehbereichs D und gleicht den Verdrehwinkel W automatisch im Rahmen der Hauptmontage aus. Zu einer Fehlmontage kann es nicht kommen. Damit ist eine einfache und sicherere Montage gewährleistet.

### Bezugszeichenliste

- 1: Befestigungsvorrichtung
- 2: Sanitärobjekt
- 3: Wand
- 4: Adapterelement
- 5: Grundkörper
- 6: Schraube
- 7: Gewindestange
- 8: Befestigungsanordnung
- 9: Schaft des Adapterelements 4
- 10: Gewindebohrung des Adapterelements 4
- 11: Einführspitze des Adapterelements 4
- 12: Eingriffsöffnung im Adapterelement 4
- 13: V-Nut
- 14: Hinterschneidelement
- 15: Durchgangsloch
- 16: Wandung
- 17: Hülse
- 18: Innengewindebohrung
- 19: Aufnahmekanal
- 20: Halteelement
- 21: Madenschraube
- 22: Spitze der Madenschraube 21
- 23: Innensechskant der Madenschraube 21
- 24: Fortsatz
- 25: Fixierelement
- 26: Rohr
- 27: Flansch
- 28: Nische
- 29: Schlitz
- 30: Drahtbiegeteil
- 31: Einrastelement
- 32: Halteabschnitt
- 33: Lagerungsabschnitt
- 34: Vorsprung
- 35: Außenfläche des Adapterelements 4
- 36: Ausnehmung
- 37: Einrichtung
- A: Ausweichrichtung des Einrastelements 31
- D: Drehbereich
- E: Einführrichtung des Adapterelements 4
- F: Kraft
- L: Längsachse des Grundkörpers 5
- R: Rotationsachse des Adapterelements 4
- S: Symmetrieachse der Eingriffsöffnung 12
- V: Verstellachse des Halteelements 20
- W: Verdrehwinkel

## Patentansprüche

1. Befestigungsvorrichtung (1) zur Befestigung eines Sanitärobjekts (2), insbesondere aus Keramik, mit einem Grundkörper (5) der einen sich entlang einer Längsachse (L) erstreckenden Aufnahmekanal (19) aufweist, und mit einem insbesondere stangenförmigen Adapterelement (4) mit einer Gewindebohrung (10) zum Aufschrauben auf eine Gewindestange (7), wobei das Adapterelement (4) in den Aufnahmekanal (19) einführbar ist, und mit einem Halteelement (20), insbesondere einer Schraube (6), zum formschlüssigen Halten des Adapterelements (4) im Aufnahmekanal (19), wobei das Halteelement (20) insbesondere quer zur Längsachse (L) verstellbar im Grundkörper (5) angeordnet ist, **dadurch gekennzeichnet, dass** die Befestigungsvorrichtung (1) eine Einrichtung (37) derart aufweist, dass das Adapterelement (4) nur innerhalb eines begrenzten Drehbereichs (D) von mindestens 2 Grad, insbesondere mindestens 10 Grad, und maximal 180 Grad, vorzugsweise maximal 90 Grad, um die Längsachse (L) in den Aufnahmekanal (19) einführbar ist.

2. Befestigungsvorrichtung nach Anspruch 1, **dadurch gekennzeichnet, dass** die Einrichtung (37) derart gestaltet ist, dass das Einführen des Adapterelements (4) in den Aufnahmekanal (19) eine Zentrierung des Adapterelements (4) bezüglich dessen Orientierung um die Längsachse (L) bewirkt.

3. Befestigungsvorrichtung nach Anspruch 1 oder 2, **dadurch gekennzeichnet, dass** das Halteelement (20) und das Adapterelement (4) derart gestaltet sind, dass ein Verstellen des Halteelements (20) in Richtung des Adapterelements (4) eine Zentrierung des Adapterelements (4) bezüglich dessen Orientierung um die Längsachse (L) bewirkt.

4. Befestigungsvorrichtung nach einem der vorstehenden Ansprüche, **dadurch gekennzeichne**t**,** dass das Adapterelement (4) eine zumindest teilweise zylindrische Außenfläche (35) aufweist.

5. Befestigungsvorrichtung nach einem der vorstehenden Ansprüche, **dadurch gekennzeichnet, dass** der Aufnahmekanal (19) zumindest abschnittsweise einen von der Kreisform abweichenden Querschnitt aufweist.

6. Befestigungsvorrichtung nach Anspruch 5, **dadurch gekennzeichnet, dass** der Grundkörper (5) einen Vorsprung (34) aufweist, der den Aufnahmekanal (19) gegenüber einem gedachten Kreisquerschnitt verengt, und/oder dass der Grundkörper eine Ausnehmung aufweist, die den Aufnahmekanal gegenüber einem gedachten Kreisquerschnitt erweitert.

7. Befestigungsvorrichtung nach Anspruch 6, **dadurch gekennzeichnet, dass** sich der Vorsprung (34) über maximal 60 Grad, insbesondere über maximal 45 Grad, des Umfangs des Aufnahmekanals (19) erstreckt.

8. Befestigungsvorrichtung nach einem der vorstehenden Ansprüche, **dadurch gekennzeichnet, dass** das Adapterelement (4) eine Eingriffsöffnung (12) für das Halteelement (20) aufweist.

9. Befestigungsvorrichtung nach Anspruch 6 und 8, **dadurch gekennzeichnet, dass** der Vorsprung (34) in die Eingriffsöffnung (12) ragt, wenn das Adapterelement (4) in den Aufnahmekanal (19) eingeführt ist.

10. Befestigungsvorrichtung nach Anspruch 8 oder 9, **dadurch gekennzeichnet, dass** die Eingriffsöffnung (12) bis in den Bereich einer Einführspitze (11) des Adapterelements (4) ragt.

11. Befestigungsvorrichtung nach einem der Ansprüche 8 bis 10, **dadurch gekennzeichnet, dass** das Halteelement (20) und/oder die Eingriffsöffnung (12) konisch ausgebildet sind.

12. Befestigungsvorrichtung nach einem der vorstehenden Ansprüche, **dadurch gekennzeichnet, dass** am Grundkörper (5) ein Einrastelement (31) angeordnet ist, das beim Einführen des Adapterelements (4) in ein Hinterschneidelement (14) des Adapterelements (4) selbsttätig eingreift.

## Claims

1. Fixing arrangement (1) for fixing a sanitaryware item (2), especially made of ceramics, having a main body (5) which has a receiving channel (19) extending along a longitudinal axis (L), and having an especially rod-shaped adapter element (4) with a threaded bore (10) for screwing onto a threaded rod (7), wherein the adapter element (4) is arranged to be inserted into the receiving channel (19), and having a holding element (20), especially a screw (6), for interlockingly holding the adapter element (4) in the receiving channel (19), the holding element (20) being arranged in the main body (5) especially so as to be displaceable transversely with respect to the longitudinal axis (L), **characterised in that** the fixing arrangement (1) has a device (37) such that the adapter element (4) is insertable into the receiving channel (19) only within a limited range of rotation (D) of a minimum of 2 degrees, especially a minimum of 10 degrees, and a maximum of 180 degrees, preferably a maximum of 90 degrees, about the longitudinal axis (L).

2. Fixing arrangement according to claim 1, **characterised in that** the device (37) is configured in such a way that the insertion of the adapter element (4) into the receiving channel (19) effects a centring of the adapter element (4) in respect of its orientation about the longitudinal axis (L).

3. Fixing arrangement according to claim 1 or 2, **characterised in that** the holding element (20) and the adapter element (4) are configured in such a way that a displacement of the holding element (20) in the direction of the adapter element (4) effects a centring of the adapter element (4) in respect of its orientation about the longitudinal axis (L).

4. Fixing arrangement according to any one of the preceding claims, **characterised in that** the adapter element (4) has an at least partly cylindrical outer surface (35).

5. Fixing arrangement according to any one of the preceding claims, **characterised in that** the receiving channel (19) has, at least in some regions, a cross-section that differs from a circular shape.

6. Fixing arrangement according to claim 5, **characterised in that** the main body (5) has a projection (34) which narrows the receiving channel (19) relative to a notional circular cross-section, and/or the main body has a recess which widens the receiving channel relative to a notional circular cross-section.

7. Fixing arrangement according to claim 6, **characterised in that** the projection (34) extends over a maximum of 60 degrees, especially over a maximum of 45 degrees, of the circumference of the receiving channel (19).

8. Fixing arrangement according to any one of the preceding claims, **characterised in that** the adapter element (4) has an engagement opening (12) for the holding element (20).

9. Fixing arrangement according to claim 6 and 8, **characterised in that the** projection (34) projects into the engagement opening (12) when the adapter element (4) has been inserted into the receiving channel (19).

10. Fixing arrangement according to claim 8 or 9, **characterised in that** the engagement opening (12) extends into the region of an insertion tip (11) of the adapter element (4).

11. Fixing arrangement according to any one of claims 8 to 10, **characterised in that** the holding element (20) and/or the engagement opening (12) are of conical construction.

12. Fixing arrangement according to any one of the preceding claims, **characterised in that** on the main body (5) there is arranged a snap-in element (31) which, on insertion of the adapter element (4), automatically engages in an undercut element (14) of the adapter element (4).

## Revendications

1. Dispositif de fixation (1) destiné à la fixation d'un objet sanitaire (2), en particulier en céramique, avec un corps de base (5) qui présente un canal récepteur (19) s'étendant le long d'un axe longitudinal (L), et avec un élément adaptateur (4), en particulier en forme de tige, doté d'un perçage fileté (10) pour le visser sur une tige filetée (7), sachant que l'élément adaptateur (4) peut être introduit dans le canal récepteur (19), et avec un élément de maintien (20), en particulier une vis (6), pour le maintien en engagement positif de l'élément adaptateur (4) dans le canal récepteur (19), sachant que l'élément de maintien (20) est disposé dans le corps de base (5) à déplacement en particulier transversalement à l'axe longitudinal (L), **caractérisé en ce que** le dispositif de fixation (1) présente un système (37) de telle sorte que l'élément adaptateur (4) peut être introduit dans le canal récepteur (19) iniquement dans une plage de rotation limitée (D) d'au moins 2 degrés, en particulier au moins 10 degrés, et d'au maximum 180 degrés, de préférence au maximum 90 degrés, autour de l'axe longitudinal (L).

2. Dispositif de fixation selon la revendication 1, **caractérisé en ce que** le système (37) est réalisé de telle sorte que l'introduction de l'élément adaptateur (4) dans le canal récepteur (19) produit un centrage de l'élément adaptateur (4) relativement à son orientation autour de l'axe longitudinal (L).

3. Dispositif de fixation selon la revendication 1 ou 2, **caractérisé en ce que** l'élément de maintien (20) et l'élément adaptateur (4) sont réalisés de telle sorte qu'un déplacement de l'élément de maintien (20) en direction de l'élément adaptateur (4) produit un centrage de l'élément adaptateur (4) relativement à son orientation autour de l'axe longitudinal (L).

4. Dispositif de fixation selon l'une des revendications précédentes, **caractérisé en ce que** l'élément adaptateur (4) présente une face extérieure (35) au moins partiellement cylindrique.

5. Dispositif de fixation selon l'une des revendications précédentes, **caractérisé en ce que** le canal récepteur (19) présente au moins sectoriellement une section différant de la forme circulaire.

6. Dispositif de fixation selon la revendication 5, **caractérisé en ce que** le corps de base (5) présente une saillie (34) qui rétrécit le canal récepteur (19) par rapport à une section circulaire imaginaire, et/ou **en ce que** le corps de base présente un évidement qui élargit le canal récepteur par rapport à une section circulaire imaginaire.

7. Dispositif de fixation selon la revendication 6, **caractérisé en ce que** la saillie (34) s'étend sur au maximum 60 degrés, en particulier au maximum 45 degrés, du pourtour du canal récepteur (19).

8. Dispositif de fixation selon l'une des revendications précédentes, **caractérisé en ce que** l'élément adaptateur (4) présente une ouverture d'engagement (12) pour l'élément de maintien (20).

9. Dispositif de fixation selon les revendications 6 et 8, **caractérisé en ce que** la saillie (34) fait saillie dans l'ouverture d'engagement (12) lorsque l'élément adaptateur (4) est introduit dans le canal récepteur (19).

10. Dispositif de fixation selon la revendication 8 ou 9, **caractérisé en ce que** l'ouverture d'engagement (12) s'étend jusque dans la région d'une pointe d'introduction (11) de l'élément adaptateur (4).

11. Dispositif de fixation selon l'une des revendications 8 à 10, **caractérisé en ce que** l'élément de maintien (20) et/ou l'ouverture d'engagement (12) sont réalisés coniques.

12. Dispositif de fixation selon l'une des revendications précédentes, **caractérisé en ce qu'**un élément d'enclenchement (31) est disposé sur le corps de base (5), élément qui, lors de l'introduction de l'élément adaptateur (4), s'engage automatiquement dans un élément contre-dépouillé (14) de l'élément adaptateur (4).
